## Europäisches Patentamt

## European Patent Office

## Office européen des brevets

(19)

(11) Veröffentlichungsnummer: **0 126 855**
**B1**

(12) **EUROPÄISCHE PATENTSCHRIFT**

(45) Veröffentlichungstag der Patentschrift:
**23.11.88**

(51) Int. Cl.⁴: **B 60 K 11/04**

(21) Anmeldenummer: **84102088.6**

(22) Anmeldetag: **29.02.84**

(54) **Kühlerbefestigung für Kraftfahrzeuge.**

(30) Priorität: **26.05.83 DE 8315396 U**

(43) Veröffentlichungstag der Anmeldung:
**05.12.84 Patentblatt 84/49**

(45) Bekanntmachung des Hinweises auf die Patenterteilung:
**23.11.88 Patentblatt 88/47**

(84) Benannte Vertragsstaaten:
**DE FR GB IT NL SE**

(56) Entgegenhaltungen:
**EP-A-0 052 291**
**DE-B-1 211 501**
**FR-A-2 336 268**

(73) Patentinhaber: **Dr.Ing.h.c. F. Porsche Aktiengesellschaft, Porschestrasse 42, D-7000 Stuttgart 40 (DE)**

(72) Erfinder: **Goesse, August- Wilhelm, Raiffeisenstrasse 1a, D-7257 Ditzingen 5 (DE)**
Erfinder: **Feil, Robert, Karl- Friedrich- Strasse 368, D-7530 Pforzheim (DE)**

EP 0 126 855 B1

## Beschreibung

Die Neuerung bezieht sich auf eine Kühlerbefestigung für Kraftfahrzeuge mit aufbauseitig abgestützen elastischen Lagern, die zwischen sich den Kühler aufnehmen.

Bei einer bekannten Kühlerbefestigung der eingangs genannten Gattung (DE-AS-2 634 990) sind an der Ober und Unterseite des Kühlers vertikal verlaufende Zapfen angeformt, die in aufbauseitig gehaltene Gummilager eingreifen. Die Gummilager an der Oberseite des Kühlers sind in Aufnahmeabschnitten eines angrenzenden Querträgers gehalten, während die unteren Gummilager in Konsolen aufgenommen sind, wobei jede Konsole mittels einer Schraube an einem unten liegenden Querträger befestigt ist.

Dieser Anordnung haftet der Nachteil an, daß zum Ein- und Ausbau des Kühlers beschwerliche und kraftaufwendige Montagevorgänge erforderlich sind, da das Gewicht des Kühlers zumindest kurzfristig manuell in seiner Einbaulage gehalten werden muß. Außerdem sind wegen der festen Anordnung der Gummilager nur relativ geringe Fertigungs- und Einbautoleranzen von Kühler und Aufbau ausgleichbar.

Aufgabe der Neuerung ist es, eine Kühlerbefestigung so zu gestalten, daß sie einfach montierbar ist und daß durch sie die auftretende Fertigungs- und Einbautoleranzen ausgleichbar sind.

Neuerungsgemäß ist diese Aufgabe durch die kennzeichnenden Merkmale des Anspruchs 1 gelöst Weitere, die Neuerung in vorteilhafter Weise ausgestaltenden Merkmale enthalten die Unteransprüche.

Die mit der Neuerung hauptsächlich erzielten Vorteile sind darin zu sehen, daß durch die an einem oberen Querträger verstellbar gehaltenen elastischen Lager eine wesentliche Montagevereinfachung für den Kühler erzielt wird, da die verstellbaren Lager schnell und einfach von einer mit Abstand zum Kühler verlaufenden Ruhestellung ein eine am Kühler angreifende Betriebsstellung bewegbar sind und umgekehrt. Da der Kühler beim Einbau durch die feststehenden unteren Lager abgestützt und anschließend mittels der oberen verstellbaren Lager verspannt wird, ist ein manuelles Halten des Kühlers in seiner Einbaulage nicht erforderlich.

Die auftretenden Fertigungs- und Einbautoleranzen von Aufbau und Kühler werden durch den großen Verstellbereich der Lager auf einfache Art und Weise ausgeglichen.

In der Zeichnung ist ein Ausführungsbeispiel der Neuerung näher dargestellt.

Es zeigt:

Fig. 1 eine Teil- Vorderansicht eines Kühlers für ein Kraftfahrzeug mit der Befestigung nach der Neuerung,
Fig. 2 einen Schnitt nach der Linie II-II der Fig. 1.

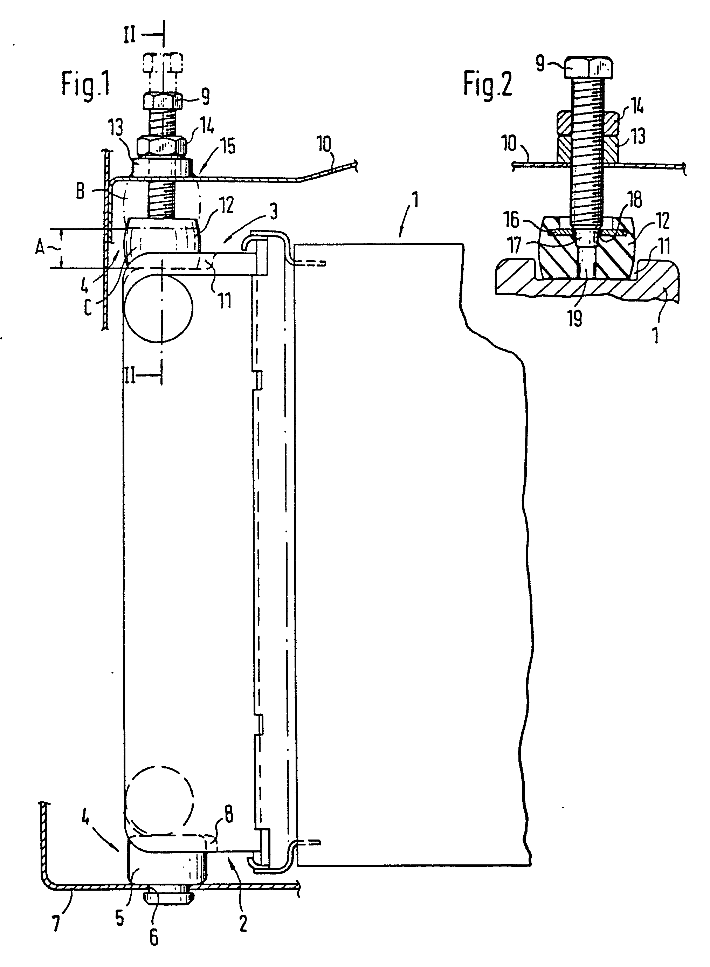

Der in Fig. 1 dargestellte Kühler 1 für ein Kraftfahrzeug ist an seiner Unterseite 2 und an seiner Oberseite 3 mittels aufbauseitig abgestützter elastischer Lager 4 in Lage gehalten. Die in der Unterseite 2 angreifenden Lager 4 werden durch Gummiblöcke 5 gebildet, die von der Oberseite her in Durchgangsöffnungen 6 einer am Aufbau befestigten, querverlaufenden Konsole 7 eingeknüpft werden. Jeder Gummiblock 5 weist in der Draufsicht gesehen einen kreisrunden Querschnitt auf und greift in eine am Kühler 1 angeordnete, korrespondierende Aufnahme 8 ein.

Gemäß Fig. 1 und 2 sind die an der Oberseite 3 des Kühlers 1 angreifenden, elastischen Lager 4 in Höhenrichtung verstellbar ausgebildet und mittels einer Schraube 9 gegen den Kühler 1 spannbar. Die Lager 4 sind an einen mit Abstand zur Oberseite 3 des Kühlers 1 verlaufenden Querträger 10 verstellbar gehalten und ragen in am Kühler 1 angeordnete, die Lager 4 zumindest teilweise umgebende Aufnahmen 11 hinein.

Jedes vorstellbare Lager 4 umfaßt einen mit der Schraube 9 lösbar verbundenen Gummiblock 12, eine Schweißmutter 13 und eine Kontermutter 14. Die Schraube 9 ist in die an der Oberseite 15 des Querträgers 10 befestigte Schweißmutter 13 eingedreht und mittels der mit der Schweißmutter 13 zusammenwirkenden Kontermutter 14 in der gewünschten Lage festsetzbar.

In den Gummiblock 12 ist eine Druckplatte 16 eingesetzt, an der sich ein abgedrehter, endseitiger Zapfen 17 der Schraube 9 abstützt (Fig. 2). Der Zapfen 17 ist durch eine zentrisch angeordnete Ausnehmung 18 der Druckplatte 16 hindurchgeführt und wird in eine dahinterliegende Bohrung 19 des Gummiblocks 12 eingepreßt, d.h., der Zapfendurchmesser ist geringfügig größer ausgebildet als der Durchmesser der Bohrung 19.

Mittels der Schraube 9 ist das verstellbare Lager 4 von einer mit Abstand A zur Oberseite 3 des Kühlers 1 verlaufenden Ruhestellung B - hierbei liegt der Gummiblock 12 an der Unterseite des Querträger 10 an - in eine mit der Aufnahme 11 zusammenwirkende Betriebsstellung C bewegbar. Dadurch wird ein einfacher und schneller Ein- und Ausbau des Kühlers gewährleistet.

## Patentansprüche

1. Kühlerbefestigung für Kraftfahrzeuge mit aufbauseitig abgestützen elastischen Lagern (4), die zwischen sich den Kühler (1) aufnehmen, dadurch gekennzeichnet, daß zumindest eines der elastischen Lager (4) verstellbar und mittels einer Schraube (9) gegen den Kühler (1) spannbar ist.

2. Kühlerbefestigung nach Anspruch 1, dadurch gekennzeichnet, daß das verstellbare Lager (4) in eine am Kühler (1) vorgesehene, das Lager (4) zumindest teilweise umgebende Aufnahme (11) hineinragt.

3. Kühlerbefestigung nach den Ansprüchen 1 und 2, dadurch gekennzeichnet, daß das Verstellbare Lager (4) an einem oberhalb des Kühlers (1) angeordneten Querträger (10) gehalten ist.

4. Kühlerbefestigung nach Anspruch 1, dadurch gekennzeichnet, daß die Schraube (9) in eine am Querträger (10) befestigte Schweißmutter (13) eingedreht ist und daß die Schraube (9) mittels einer, mit der Schweißmutter (13) zusammenwirkenden Kontermutter (14) festsetzbar ist.

5. Kühlerbefestigung nach Anspruch 1, dadurch gekennzeichnet, daß in einem Gummiblock (12) des verstellbaren Lagers (4) eine Druckplatte (16) eingesetzt ist, an der sich ein abgedrehter, endseitiger Zapfen (17) der Schraube (9) abstützt.

6. Kühlerbefestigung nach Anspruch 5, dadurch gekennzeichnet, daß die Schraube (9) und der Gummiblock (12) lösbar miteinander verbunden sind.

7. Kühlerbefestigung nach den Ansprüchen 5 und 6, dadurch gekennzeichnet, daß der Zapfen (17) durch eine Ausnehmung (18) der Druckplatte (16) hindurchgeführt und in einer darunterliegenden Bohrung (19) des Gummiblocks (12) eingepreßt ist.

**Claims**

1. Radiator attachment for motor vehicles with resilient bearings (4) supported on the body side, which bearings receive the radiator (1) between them, characterised in that at least one of the flexible bearings (4) is adjustable and clampable against the radiator (1) by means of a screw (9).

2. Radiator attachment according to claim 1, characterised in that the adjustable bearing (4) projects into a recess (11) provided on the radiator (1) and at least partly surrounding the bearing (4).

3. Radiator attachment according to claims 1 and 2, characterised in that the adjustable bearing (4) is supported on a cross member (10) arranged above the radiator (1).

4. Radiator attachment according to claim 1, characterised in that the screw (9) is screwed into a weld nut (13) attached to the cross member (10) and in that the screw (9) can be fastened by means of a counter nut (14) cooperating with the weld nut (13).

5. Radiator attachment according to claim 1, characterised in that a pressure plate (16) is inserted in a rubber block (12) of the adjustable bearing (4), which plate supports a reduced end peg (17) of the screw (9).

6. Radiator attachment according to claim 5, characterised in that the screw (9) and the rubber block (12) are detachably connected together.

7. Radiator attachment according to claims 5 and 6, characterised in that the peg (17) is guided through a recess (18) of the pressure plate (16) and is presed into an underlying bore (19) of the rubber block (12).

**Revendications**

1. Fixation de radiateur pour véhicules automobiles comportant des supports 4 élastiques fixés sur la carrosserie et recevant entre eux le radiateur (1), caractérisée en ce que l'un au moins des supports élastiques (4) est réglable et peut être serré au moyen d'une vis (9) contre le radiateur (1).

2. Fixation de radiateur selon la revendication 1, caractérisée en ce que le support (4) réglable pénètre dans un logement (11) prévu dans le radiateur (1), entourant au moins partiellement le support (4).

3. Fixation de radiateur selon les revendications 1 et 2, caractérisée en ce que le support (4) réglable est fixé sur une poutre transversale (10) disposée au-dessus du radiateur (1).

4. Fixation de radiateur selon la revendication 1, caractérisée en ce que la vis (9) est introduite dans un écrou à souder (13) fixe sur la poutre transversale (10), et en ce que la vis (9) peut être fixée au moyen d'un contre-écrou (14) coopérant avec l'écrou à souder (13).

5. Fixation de radiateur selon la revendication 1, caractérisée en ce qu'une plaque de pression (16) est bloquée dans un bloc de cautchouc (12) du support (4) réglable, contre laquelle un tourillon (17) usiné au tour, terminal, de la vis (9) prend appui.

6. Fixation de radiateur selon la revendication 5, caractérisée en ce que la vis (9) et le bloc en caoutchouc (12) sont assemblés entre eux de manière amovible.

7. Fixation de radiateur selon les revendications 5 et 6, caractérisée en ce que le tourillon (17) traverse un évidement (18) de la plaque de pression (16) et est pressé dans un perçage (19) situé au-dessous du bloc en caoutchouc (12).

Fig.1

Fig.2